## Europäisches Patentamt

## European Patent Office

## Office européen des brevets

(19)

(11) Publication number: **0 035 300**
**B1**

(12)　**EUROPEAN PATENT SPECIFICATION**

(45) Date of publication of patent specification: **21.03.84**

(51) Int. Cl.³: **C 22 C 22/00, C 01 B 6/24**

(21) Application number: **81200188.1**

(22) Date of filing: **18.02.81**

(54) **Method of preparing a hydrogen-absorbing alloy.**

(30) Priority: **05.03.80 NL 8001314**

(43) Date of publication of application:
**09.09.81 Bulletin 81/36**

(45) Publication of the grant of the patent:
**21.03.84 Bulletin 84/12**

(84) Designated Contracting States:
**DE FR GB NL SE**

(56) References cited:
**DE - A - 2 701 893**
**GB - A - 1 548 581**
**US - A - 4 144 103**
**US - A - 4 163 666**

HANSEN: "Constitution of Binary Alloys", edited by McGraw Hill Book Cy., 1958, New York, US
ELLIOTT: "Constitution of Binary Alloys First Supplement", edited by McGraw Hill Book Cy, 1958, New York, US

(73) Proprietor: **N.V. Philips' Gloeilampenfabrieken**
**Groenewoudseweg 1**
**NL-5621 BA Eindhoven (NL)**

(72) Inventor: **van Essen, Roelof Meine**
**c/o INT. OCTROOIBUREAU B.V. Prof. Holstlaan 6**
**NL-5656 AA Eindhoven (NL)**
Inventor: **Buschow, Kurt Heinz Jürgen**
**c/o INT. OCTROOIBUREAU B.V. Prof. Holstlaan 6**
**NL-5656 AA Eindhoven (NL)**

(74) Representative: **Auwerda, Cornelis Petrus et al,**
**INTERNATIONAAL OCTROOIBUREAU B.V. Prof. Holstlaan 6**
**NL-5656 AA Eindhoven (NL)**

Courier Press, Leamington Spa, England.

## Method of preparing a hydrogen-absorbing alloy

The invention relates to a method of preparing a zirconium-manganese alloy suitable for the storage of hydrogen.

It is known from the Journal of the Less-Common Metals, 53 pages 117—131 (1977) that a compound having the composition $ZrMn_2$ is capable of absorbing hydrogen. At a hydrogen pressure of $8.10^5$ Pa at room temperature, 1 molecule of $ZrMn_2$ can absorb 3.6 atoms of hydrogen. However at 50°C the hydrogen pressure over the compound $ZrMn_2H_{3.6}$ formed was only 700 Pa. At 80°C this pressure is as low as 3000 Pa. According to British Patent Specification 1,508,764, the binary alloys of zirconium with manganese, such as $ZrMn_2$, are not suitable for practical use for hydrogen storage as they have an insufficient plateau pressure at suitable temperatures and pressures.

The present invention has for its object to prepare alloys of the $ZrMn_2$ type, which are suitable for hydrogen storage.

According to the invention this object is accomplished by means of a method which is characterized in that an alloy is prepared consisting of from 64.3 to 77.3 at % manganese, the remainder zirconium, cast, after which the casting is heated in vacuum or in an inert atmosphere to an elevated temperature below the melting point until a homogeneous single C14 type of Laves phase has been obtained.

The present invention is based on the discovery that in the alloy system zirconium-manganese, a uniform alloy phase of the type $ZrMn_2$ exists, which has a range of existence from 64,3 to 77,3 at% Mn, the remainder being Zr, the crystal structure of which is of the hexagonal Laves phase C14 type, the a and the c parameters of the crystal lattice varying from 0.5045 nm to 0.498 nm for a and from 0.8282 nm to 0.8175 nm for c.

For the entire range of compositions the relevant alloys have the property that no second phase precipitations occur. Such second phases which may occur in comparable alloys, such as in titanium-manganese alloys may have a negative effect on the ability to store and to release hydrogen. It further means that the castings need not be quenched in order to maintain at room temperature the advantageous structure produced.

Preferred heating temperatures are temperatures between 900°C and 1150°C. After the casting has been subjected to the heat treatment, it is pulverized and exposed to a hydrogen atmosphere. The materials need not be subjected a special activation treatment.

At 20°C the zirconium-manganese alloys prepared in accordance with the invention have plateau pressures lower than $10^6$ Pa, the plateau pressure of a given alloy depending on the alloy composition. It has been found that at ambient temperature an alloy having the composition 64.3 at% Mn, remainder Zr ($ZrMn_{1.8}$) has a plateau pressure of $10^4$ Pa, while more than 90% of all the stored hydrogen can be withdrawn from the material at this pressure.

The invention will now be further explained with reference to the accompanying Figures and a number of embodiments. In the drawings:

Figure 1 shows curves which indicate the variation of the lattice parameters a and c versus the composition of the alloy $ZrMn_x$.

Figure 2 shows the dependence of the quantity of absorbed hydrogen in alloy compositions $ZrMn_x$ on the hydrogen pressure. The alloys having not been thermally treated as required by the invention.

Figure 3 shows the dependence of the quantity of hydrogen absorbed in alloys $ZrMn_x$, which were prepared in accordance with the invention, on the hydrogen pressure.

Embodiment 1

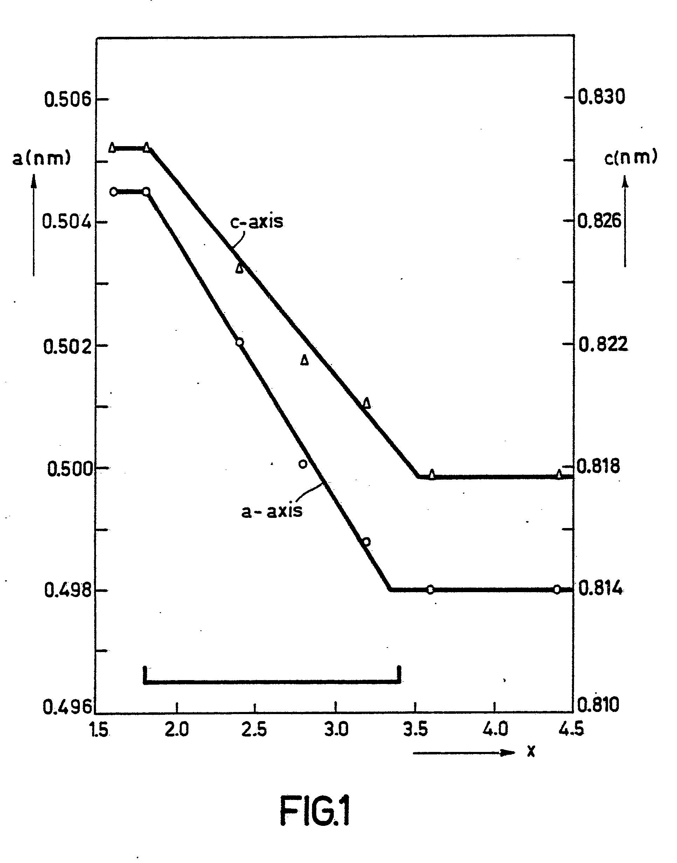

Alloys were prepared having the following compositions $ZrMn_{1.8}$, $ZrMn_{1.8}$, $ZrMn_{2.4}$, $ZrMn_{3.2}$, $ZrMn_{3.6}$ and $ZrMn_{4.4}$ by melting together elements having a purity of 99.9% and by heating these elements thereafter in vacuum at 1050°C for 3 days. By means of X-ray photographs the principal reflection lines of these compositions were indexed on the basis of the hexagonal Laves phase structure (C14 type). Figure 1 shows the results, a graduated scale in nm is provided on the left-hand vertical axis for the a-axis, a graduated scale in nm being provided on the right-hand vertical axis for the c-axis. Curve a shows the variation of the a-axis, curve c of the c-axis. In the compositional range $ZrMn_{1.8}$ to $ZrMn_{3.4}$ the lattice constants change considerably, for compositions outside this range they remain constant. These compositions might therefore be considered as limit compositions for the uniform range of alloys having a C-14 structure. These compositions correspond to 64.3 at% Mn, remainder Zr and 77.3 at% Mn, remainder Zr, respectively.

Embodiment II

Castings having the compositions $ZrMn_x$, x being 1.8, 2.0, 2.4, 2.8, 3.0, 3.2 were produced. The castings were pulverized without having been subjected to a thermal treatment and thereafter exposed to a $4.10^6$ Pa hydrogen atmosphere at a temperature of 50°C. Hydrogen was a few times absorbed and withdrawn again at a reduced pressure from the samples.

Thereafter the hydrogen-isotherm (hydrogen pressure versus composition) was measured at room temperature.

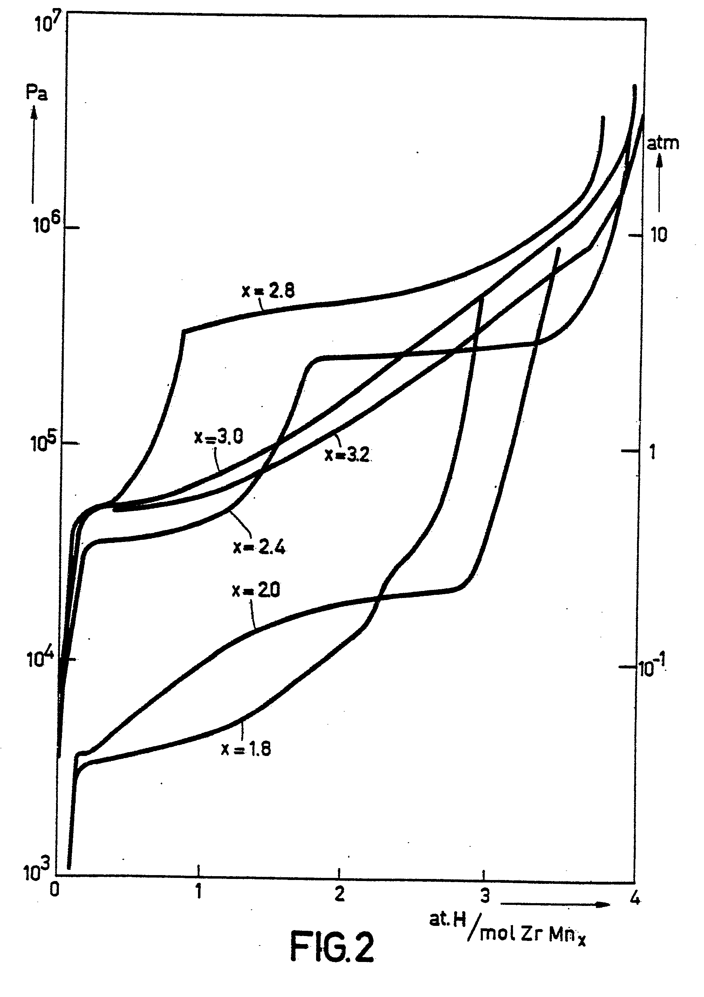

Figure 2 shows the results of these measurements.

The hydrogen pressure is plotted in Pa on the vertical axis, the number of absorbed gram atoms of hydrogen per gram-molecular weight of $ZrMn_x$ are plotted on the horizontal axis.

It appears from Figure 2 that, without having been subjected to a thermal treatment, none of the tested compositions has a single, sharp plateau pressure. With different compositions different levels occur in the investigated pressure range. This is very pronounced for the composition $ZrMn_{2.4}$ (70.6 at% Mn, 29.4 at% Zr). A hydride having the composition $ZrMn_{2.4}H$ at approximately $25.10^3$ Pa is then formed first, a hydride of the composition $ZrMn_{2.4}H_3$ being formed at a pressure of approximately $25.10^4$ Pa.

### Embodiment III

Thereafter, alloys having the compositions $ZrMn_{1.8}$, $ZrMn_{2.4}$ and $ZrMn_{2.8}$ were prepared in accordance with the invention.

The alloys were melted together from the elements having a purity of 99.9%. The castings were heated in vacuum at 1050°C for 3 days. Thereafter, after having been cooled to ambient temperature, the castings were pulverized and exposed to hydrogen at a pressure of $4.10^6$ Pa, at a temperature of 50°C. Hydrogen was absorbed and withdrawn several times, thereafter the isotherm of the hydrogen pressure versus the composition was measured at ambient temperature.

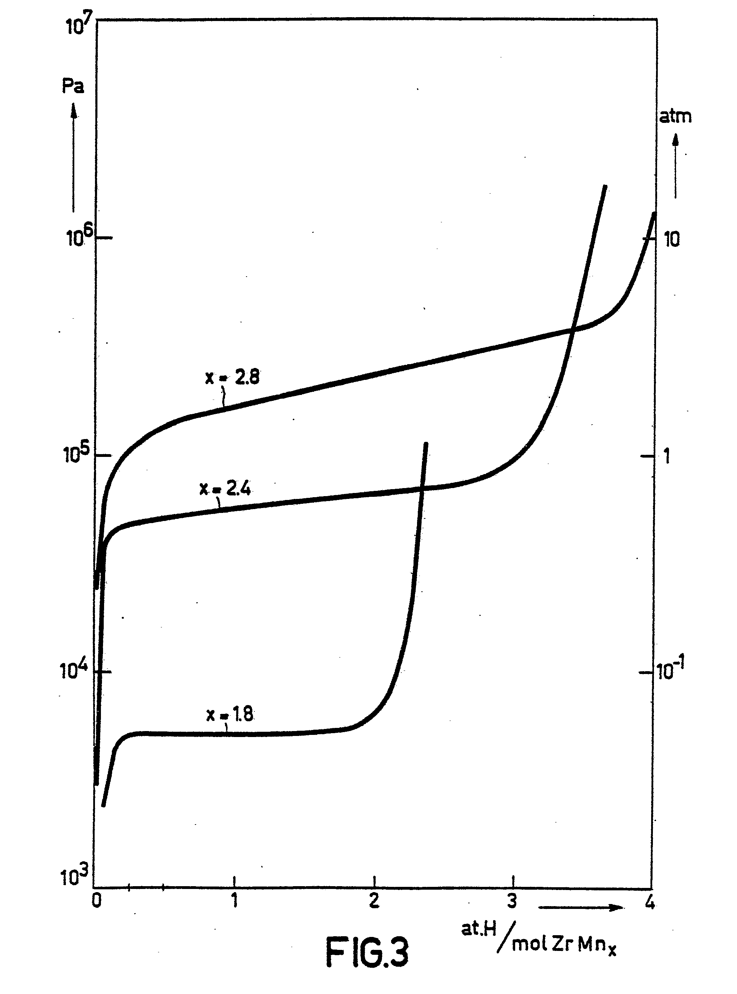

Figure 3 shows the results from which it can be seen that the hydrogen concentration in the alloys has become considerably less dependent upon the pressure in the plateau region of the curve. The double levels have disappeared.

The measurements were repeated at a number of samples which were quenched after the thermal treatment; it appeared that no change in the hydrogen-absorbing capacity had occurred.

Figure 3 shows that substantially the total quantity of hydrogen can be withdrawn again from the alloy at the plateau pressure. This increases the suitability of the material for use as a hydrogen-absorbing material.

The alloys which were prepared in accordance with the invention can be used in hydrogen-storage arrangements.

### Claims

1. A method of preparing an alloy of zirconium and manganese suitable for the storage of hydrogen, characterized in that an alloy is prepared consisting of from 64.3 to 77.3 at% of manganese, the remainder zirconium, cast, after which the casting is heated in vacuum or in an inert atmosphere to an elevated temperature below the melting point until a homogeneous single C14 type of Laves phase has been obtained.

2. A method as claimed in Claim 1, characterized in that the casting is heated to a temperature between 900 and 1150°C.

3. A method as claimed in Claim 1, characterized in that an alloy is prepared comprising 70.6 at% manganese and 29.4 at% zirconium $(ZrMn_{2.4})$.

4. A hydrogen-absorbing alloy prepared in accordance with the method as claimed in any of Claims 1—3.

5. An arrangement for storing hydrogen using an alloy prepared in accordance with the method claimed in Claims 1—3.

### Patentansprüche

1. Verfahren zum Herstellen einer Legierung aus Zirkon und Mangan, geeignet zum Speichern von Wasserstoff, dadurch gekennzeichnet, dass eine Legierung hergestellt wird, die aus 64,3 bis 77,3 Atom % Mangan besteht und wobei der Rest Zirkon ist, gegossen und dass der Gusskörper im Vakuum oder in einer inerten Atmosphäre erhitzt wird auf eine erhöhte Temperatur unterhalb des Schmelzpunktes, bis eine homogene einfache $C_{14}$-Laves-Phase erhalten worden ist.

2. Verfahren nach Anspruch 1, dadurch gekennzeichnet, dass der Gusskörper auf eine Temperatur zwischen 900 und 1150°C erhitzt wird.

3. Verfahren nach Anspruch 1, dadurch gekennzeichnet, dass eine Legierung hergestellt wird, die 70,6 Atom % Mangan und 29,4 Atom % Zirkon enthält $(ZrMn_{2.4})$.

4. Wasserstoffabsorbierende Legierung, hergestellt nach dem Verfahren nach einem der Ansprüche 1 bis 3.

5. Vorrichtung zum Speichern von Wasserstoff unter Verwendung einer Legierung, die nach dem Verfahren nach den Ansprüchen 1—3 hergestellt worden ist.

### Revendications

1. Procédé de préparation d'un alliage de zirconium et de manganèse pour le stockage d'hydrogène, caractérisé en ce que par la préparation d'un alliage constitué par 64,3 à 77,3% en atomes de manganèse, le reste étant du zirconium, puis moulage, après quoi le produit de moulage est chauffé sous vide ou dans une atmosphère inerte à une température élevée au-dessous du point de fusion jusqu'à obtention d'une phase de "laves" simple homogène du type C14.

2. Procédé selon la revendication 1, caractérisé en ce que le produit de moulage est chauffé à une température comprise entre 900 et 1150°C.

3. Procédé selon la revendication 1, caractérisé par la préparation d'un alliage contenant en atomes 70,6% de manganèse et 29,4% de zirconium $(ZrMn_{2.4})$.

4. Alliage d'absorption d'hydrogène préparé conformément au procédé selon l'une des revendications 1 à 3.

5. Dispositif de stockage d'hydrogène utilisant un alliage préparé conformément au procédé selon les revendications 1 à 3, préparé conformément au procédé selon les revendications 1 à 3.

FIG.1

FIG.2

FIG.3